(19) Europäisches Patentamt
European Patent Office
Office européen des brevets

(11)  **EP 3 201 276 B1**

(12)  **EUROPÄISCHE PATENTSCHRIFT**

(45) Veröffentlichungstag und Bekanntmachung des Hinweises auf die Patenterteilung:
**29.08.2018  Patentblatt 2018/35**

(21) Anmeldenummer: **15778629.4**

(22) Anmeldetag: **30.09.2015**

(51) Int Cl.:
*C09D 1/00* (2006.01)          *C09D 7/00* (2018.01)

(86) Internationale Anmeldenummer:
**PCT/EP2015/072557**

(87) Internationale Veröffentlichungsnummer:
**WO 2016/050846 (07.04.2016 Gazette 2016/14)**

(54) **NEUARTIGE INNENRAUMBESCHICHTUNG ZUR NACHHALTIGEN VERBESSERUNG DER RAUMLUFT UND DES RAUMKLIMAS**

NOVEL COATING FOR INTERIORS FOR LASTING IMPROVEMENT OF INDOOR AIR AND THE INDOOR CLIMATE

NOUVEAU REVÊTEMENT D'ESPACES INTÉRIEURS POUR AMÉLIORER DURABLEMENT L'AIR INTÉRIEUR ET DE L'AMBIANCE INTÉRIEURE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.10.2014   DE 102014219906**

(43) Veröffentlichungstag der Anmeldung:
**09.08.2017   Patentblatt 2017/32**

(73) Patentinhaber: **Fraunhofer Gesellschaft zur Förderung der angewandten Forschung E.V.
80686 München (DE)**

(72) Erfinder: **SCHMID, Helmut
72250 Freudenstadt (DE)**

(74) Vertreter: **Gille Hrabal
Brucknerstrasse 20
40593 Düsseldorf (DE)**

(56) Entgegenhaltungen:
**WO-A1-02/060996          WO-A2-2013/081564
CN-A- 103 706 244        DE-A1- 10 032 687
DE-A1- 10 251 392        DE-A1-102009 020 555
US-A- 5 705 466**

**Beschreibung**

Die vorliegende Erfindung betrifft eine Zusammensetzung zur Verwendung als Beschichtung, die Verwendung einer solchen Zusammensetzung, eine Beschichtung, enthaltend die Zusammensetzung sowie ein Verfahren zur Herstellung der Zusammensetzung.

Natürliche und anthropogene Umwelt-Schadstoffe sind überall vorhanden. Eine spezielle Untergruppe dieser Umwelt-Schadstoffe stellen die Luftschadstoffe dar. Sie insbesondere bei der Energieerzeugung (z. B. Kraftwerke), in der Industrie, der Landwirtschaft und durch den Personentransport gebildet. Solche Luftschadstoffe führen zu einer Versäuerung des Bodens, Eutrophierung, Ozonbildung, Verschlechterung der Luftqualität und sogar insgesamt zu Klimaveränderungen. Eine Unterklasse der Luftschadstoffe stellen die Raumluft-Schadstoffe dar. Bei ihnen handelt es sich insbesondere um $CO_2$, Formaldehyd, flüchtige organische Verbindungen (volatile organic compounds, VOCs) sowie geruchaktive flüchtige organische Verbindungen (odour active volatile organic compounds, OVOCs). Diese Substanzen gelangen durch Einrichtungsgegenstände (lackierte und verleimte Möbel, Holzschutzmittel, Hölzer, Polyurethane und Polystyrole), Tapeten, Wandfarben, Textilien, Haushalts- und Bürogeräte wie Drucker oder Kopierer, Verbrennungsvorgänge beispielsweise in einem Kamin, beim Kochen, Braten oder Backen, Klebstoffe, Wasch-, Putz-, Reinigungs- und Körperpflegemittel sowie auch Kosmetika in die Raumluft. Auch können sie durch mikrobielle Aktivitäten in Schimmelpilzen oder durch Personenausdünstungen erzeugt werden.

Raumluft-Schadstoffe können viele verschiedene gesundheitliche Auswirkungen beim Menschen haben. Beispielsweise sind sie häufig Ursache von Müdigkeit, Kopfschmerzen, verringerte Leistungsfähigkeit, Infektionsanfälligkeit, Irritationen der Augen, Nase, Rachen, trockene Haut sowie Juckreiz. Auch wirken einige VOCs, wie beispielsweise Benzol, krebserregend.

Daher wird vom Umweltbundesamt ein TVOC-Summenwert (Summe aller flüchtigen organischen Verbindungen, total volatile organic compounds) bestimmt, welcher derzeit bei 0,3 mg VOCs/m$^3$ liegt. Dabei sind zusätzliche Grenzwerte für Formaldehyd und Kohlenstoffdioxid einzuhalten.

Insgesamt besteht somit ein allgemeines Bestreben darin, diese Grenzwerte einzuhalten, mithin die Konzentration an Raumluft-Schadstoffen zu reduzieren.

In der DE 100 32 687 A1 wird ein Spezialanstrich für Innenräume beschrieben, welcher Innenraumschadstoffe absorbiert und unter den raumklimatischen Bedingungen irreversibel fixiert. Dort wird eine Zusammensetzung offenbart, die eine Mischung aus Zeolithen und Kieselgel ist und der zum inneren Halt ein Bindemittel wie beispielsweise Methylcellulose beigemischt wird. Nachteilig an diesem Wandanstrich ist jedoch, dass dieser zwar durch die verwendeten Materialien die Raumluft-schadstoffe bindet, allerdings naturgemäß nach gewisser Zeit seine Wirkung verliert, da der Wandanstrich gesättigt ist.

Aus der WO 02/060996 A1 ist ebenso eine Beschichtung mit adsorbierenden Eigenschaften für Innenraumflächen bekannt. Dazu wird eine Beschichtung vorgeschlagen, welche 0,5 bis 20 Massen-% eines Zusatzstoffes enthält, welcher adsorbierende Eigenschaften aufweist. Es wurde gefunden, dass durch eine geeignete Mischung eines organischen und/oder anorganischen Bindemittels mit einem entsprechenden Zusatzstoff Schadstoffe aus der Raumluft oder dem Mauerwerk von Innenräumen aufgenommen werden können und durch chemische Reaktion und/oder physikalische Immobilisierung bei üblichen Raumtemperaturen umgewandelt oder festgehalten werden, so dass eine nachhaltige Verringerung der Konzentration von Schad- und Geruchsstoffen in der Raumluft messbar ist. Allerdings ist die Aufnahmekapazität dieser Beschichtungen ebenfalls begrenzt. Zudem stellt die Beschichtung der WO 02/060996 A1 keinerlei Anforderungen an die Pigmentierbarkeit der Beschichtung. So wird beispielsweise als möglicher Zusatzstoff Aktivkohle verwendet, wodurch der Anstrich optischen Anforderungen gegebenenfalls nicht gerecht werden kann.

Auch aus der CN 103706244 A ist eine Zusammensetzung zu Aufreinigung der Innenraumluft bekannt, welche Zeolithe, Aktivkohle, Natriumpercarbonat und Dichlorbenzol enthält. Allerdings handelt es sich bei dieser Zusammensetzung nicht um einen Anstrich und daher ist auch hier die Pigmentierung/Pigmentierbarkeit von keiner Relevanz.

Daher besteht noch immer die Nachfrage nach einem Wandanstrich, welche effektiv und nachhaltig die Qualität der Raumluft verbessert und dabei als Wandanstrich auch den ästhetischen Anforderungen gerecht wird.

Ausgehend von diesem Stand der Technik liegt somit der vorliegenden Erfindung die Aufgabe zu Grunde mindestens einen, bevorzugt alle Nachteile des Standes der Technik zu verbessern. Insbesondere liegt der vorliegenden Erfindung die Aufgabe zu Grunde, eine Zusammensetzung bereitzustellen, welche als Beschichtung verwendet werden kann, und dabei die Konzentration der Raumluft-Schadstoffe reduziert. Dabei sollte diese Beschichtung als Wandanstrich auch den ästhetischen Anforderungen an einen solchen Anstrich gerecht werden. Insbesondere sollte die Zusammensetzung durch den Zusatz von Pigmenten beliebig gefärbt werden können.

Gelöst wurden diese Aufgaben durch die erfindungsgemäße Zusammensetzung, die Verwendung der erfindungsgemäßen Zusammensetzung, die erfindungsgemäße Beschichtung sowie das erfindungsgemäße Verfahren zur Herstellung der Beschichtung.

**Zusammensetzung**

Erfindungsgemäß wird eine Zusammensetzung zur Verwendung als Beschichtung bereitgestellt, welche

ein Kaliwasserglas,

poröses Silikagelpulver mit einer inneren Oberfläche von 300 bis 1000 $m^2/g$, gemessen durch Gasadsoption (BET-Verfahren) nach ISO 9277:2010,

mindestens ein Zeolith der Formel

$$(Na, K, ½ Ca, ½ Mg)_6(Al_6Si_{30}O_{72}) \times 20\ H_2O,$$

mindestens ein Percarbonat,

mindestens einen Füllstoff ausgewählt aus der Gruppe, bestehend aus Titandioxid und Calciumcarbonat und

Wasser enthält.

Es hat sich überraschenderweise herausgestellt, dass die erfindungsgemäße Zusammensetzung besonders geeignet für die Verwendung als Beschichtung ist. Dabei ist die Beschichtung bevorzugt ein Wandanstrich. Bevorzugt ist die Beschichtung ein Innenraumwandanstrich. Ganz besonders bevorzugt ist die Zusammensetzung ein Wandanstrich. Des Weiteren bevorzugt ist die Zusammensetzung ein Innenraumwandanstrich. Die erfindungsgemäße Zusammensetzung trägt überraschend gut zur Reduzierung von Raumluft-Schadstoffen bei. Darüber hinaus verbessert die erfindungsgemäße Zusammensetzung auch das Raumklima. Unter dem Begriff des Raumklimas wird erfindungsgemäß bevorzugt die Temperatur und die Luftfeuchtigkeit in einem Raum verstanden. Diese können Einfluss auf das Wohlbefinden des Menschen haben und daher gibt es ein optimiertes Raumklima. Besonders bevorzugt umfasst das Raumklima auch die chemische Zusammensetzung der Luft in Bezug auf das Vorliegen von Raumluft-Schadstoffen. Ein optimiertes Raumklima kann insbesondere die Schimmelbildung verhindern. Zudem kann bevorzugt auch vermieden werden, dass Holz, Leder oder auch Plastik spröde werden und/oder dass Menschen brennende Augen, spröde Lippen oder trockene Schleimhäute bekommen.

Auf Grund des pH-Wertes der Zusammensetzung wirkt die erfindungsgemäße Zusammensetzung intrinsisch antimikrobiell. Dadurch kann die Anlagerung von Mikroorganismen verhindert werden, welche wiederum störende Raumluft-Schadstoffe produzieren würden. Des Weiteren weist die erfindungsgemäße Zusammensetzung feuchtigkeitsregulierende Eigenschaften auf. Dies führt dazu, dass die Raumluft konstant eine für den Menschen angenehme Luftfeuchtigkeit aufweist. Bevorzugt weist die Raumluft dadurch konstant eine relative Luftfeuchtigkeit von 40 bis 60 % auf (Verhältnis des Wasserdampfgehalts zum maximal möglichen Wasserdampfgehalt bei einer gegebenen Temperatur und einem gegebenen Druck).

Die Schadstoffreduzierung durch die erfindungsgemäße Zusammensetzung wird zunächst durch eine Adsorption und Absorption mindestens eines Schadstoffs bewirkt. Allerdings folgt im Anschluss eine oxidative Schadstoff-Zersetzung, wodurch der Anstrich nachhaltig ist, d. h. es tritt im Wesentlichen keine Sättigung ein. Daher kann die erfindungsgemäße Beschichtung mehrere Jahre ihre Funktion in Innenräumen erfüllen. Des Weiteren ist der Oxidator zudem nachladbar. Zusätzlich ist die erfindungsgemäße Zusammensetzung kostengünstig. Sie erlaubt zudem eine einfache Auftragung auf eine Wand oder Decke, wodurch auf eine einfache Weise ein Anstrich für Innenräume mit den oben genannten Eigenschaften erhalten wird. Zudem ist die erfindungsgemäße Zusammensetzung pigmentierbar. Dies bedeutet, dass ihr ein Pigment zugesetzt werden kann. Dadurch entsteht eine Beschichtung, welche unter den Aspekten eines Wandanstrichs die ästhetischen Anforderungen erfüllt.

Erfindungsgemäß enthält die Zusammensetzung ein Kaliwasserglas (wasserlösliches $K_2SiO_3$). Seine Verwendung ist insbesondere im Bereich der Mineralfarben (auch als Wasserglasfarben, Silikatfarben oder Keimfarben bezeichnet) bekannt. Es dient als Bindemittel und verleiht der erfindungsgemäßen Zusammensetzung eine sehr hohe Langlebigkeit und Witterungsbeständigkeit. Insbesondere bewirkt dieses Bindemittel, dass die Zusammensetzung gut an der zu beschichtenden Oberfläche haftet (bevorzugt einer Wand oder Decke).

Das Bindemittel härtet durch Verdunstung des Lösungsmittels Wasser, gefolgt von der Polykondensation und Ausbildung von $K_2CO_3$-Dendrimeren durch Kohlenstoffdioxidaufnahme aus der Luft aus. Die entstehende Struktur kann durch Einstellung des pH-Wertes bestimmt werden (Sol-Gel-Verfahren). Insgesamt bildet sich ein System, welches eine offenporige Struktur aufweist, wobei der Zusammenhalt allein durch Anhaftung der Partikel bewirkt wird.

Dieses Bindemittel weist in Interaktion mit Wasser eine pH-Wert von über 10,0 auf, so dass es zusätzlich intrinsisch antimikrobielle Eigenschaften aufweist. Dies trägt ebenfalls zur Reduzierung der Raumluft-Schadstoffe bei (s. o.).

Es hat sich überraschenderweise herausgestellt, dass durch den Zusatz von porösem Silikagelpulver die Offenporigkeit des Bindemittels Kaliwasserglas gesteuert werden kann, so dass die erfindungsgemäße Zusammensetzung insgesamt in ein System mit einer hohen Oberflächenporosität, Gesamtporosität und einer großen Oberfläche aushärtet. Das poröse Silikagelpulver fungiert hier als Nukleierungsmittel. Grundsätzlich weist das zugesetzte poröse Silikagelpulver bereits selbst eine hohe Oberfläche auf. Das poröse Silikagelpulver weist eine innere Oberfläche von 300 bis 1000 $m^2$/g, besonders bevorzugt von 500 bis 900 $m^2$/g und ganz besonders bevorzugt von 700 bis 800 $m^2$/g auf. Die innere Oberfläche wird durch Gasadsorption (BET-Verfahren) bestimmt. Dieses Verfahren ist dem Fachmann bekannt (siehe ISO 9277:2010).

Zusätzlich bewirkt das poröse Silikagelpulver, dass die erfindungsgemäße Zusammensetzung nach der Aushärtung simultane wärme- und feuchtigkeitsregulierende Eigenschaften aufweist. Es ist bekannt, dass dieses Material als reaktiver reversible Sorptions-Wärmespeicher mit einem Temperaturarbeitsbereich von 40 bis 100 °C eingesetzt werden kann. Diese Eigenschaft kann beispielsweise in Maschinenräumen genutzt werden, welche häufig eine Temperatur von ≥ (größer gleich) 40 °C aufweisen. Damit hat die erfindungsgemäße Zusammensetzung auch Latentwärmespeichereigenschaften, welche zusätzlich zur Verbesserung des Raumklimas beitragen können.

Abhängig vom verwendeten Silikagelpulver kann die Wasseraufnahmekapazität 30 bis 60 Massen-% bezogen auf die eingesetzte Masse an Silikagelpulver betragen. Die exotherme Adsorptions-Enthalpie bezogen auf Wasserdampf beträgt dabei 45 kJ/(mol $H_2O$). Auch wenn zur schnellen Desportion von Wasser Temperaturen von 130 °C nützlich sind, ist auch bei normaler Raumtemperatur (bevorzugte Temperaturen von 15 bis 30 °C, besonders bevorzugt von 16 bis 28 °C) eine langsame endotherme Desorption in Abhängigkeit von der Luftfeuchtigkeit möglich. Dieser Effekt trägt durch die Feuchtigkeitsregulierung sowie auch die Wärmeregulierung somit zusätzlich positiv zur Verbesserung des Raumklimas bei.

Insbesondere ist es möglich, durch die zugegebene Menge an porösem Silikagel die Offenporigkeit der resultierenden Beschichtung anzupassen.

In einer Ausführungsform enthält die erfindungsgemäße Zusammensetzung bevorzugt zusätzlich mindestens ein Wachs. Dabei wird erfindungsgemäß unter dem mindestens einen Wachs insbesondere eine Wachs-Grundmischung verstanden. Dies bedeutet, dass es sich bei dem mindestens einen Wachs bevorzugt um eine Komponente handelt, welche unterschiedliche wachsartige Verbindungen enthält und somit eine Wachsmischung darstellt. Bevorzugt handelt es sich dabei um eine Mischung mit einer Verteilung in der Kettenlänge und/oder dem Verzweigungsgrad der enthaltenen Kohlenwasserstoffe. Diese Verteilung weist des Weiteren bevorzugt einen Hauptpeak mit Maximum auf, d. h. die Häufigkeit von Verbindungen mit einer speziellen Kohlenstoffanzahl überwiegt. Besonders bevorzugt enthält die Wachs-Grundmischung mindestens 70 Gew.-%, ganz besonders bevorzugt mindestens 75 Gew.-% und des Weiteren bevorzugt mindestens 80 Gew.-% einer Komponente, welche eine definierte Kohlenstoffzahl aufweist (die Gew.-% sind bezogen auf das Gesamtgewicht der Wachs-Grundmischung). Im Folgenden wird dieses mindestens eine Wachs als Wachs-Grundmischung bezeichnet. Bevorzugt enthält die erfindungsgemäße Zusammensetzung 0,5 bis 15 Massen-%, besonders bevorzugt 3 bis 12 Massen-% und besonders bevorzugt 8 bis 11 Massen-% mindestens einer Wachs-Grundmischung (bezogen auf die Massen-% der Gesamtzusammensetzung). Unter einem Wachs wird erfindungsgemäß ein Stoff gemäß der DGF-Einheitsmethode M-I 1 (75) verstanden.

Besonders bevorzugt enthält die erfindungsgemäße Zusammensetzung dabei mindestens eine Wachs-Grundmischung und mindestens ein weiteres Wachs. Dabei weist das mindestens eine weitere Wachs im Wesentlichen ein anderes Maximum der Kohlenstoffzahl in der Kohlenstoffzahlverteilungskurve als die Wachs-Grundmischung auf. Insbesondere stellt die Mischung der Wachs-Grundmischung und des mindestens einen weiteren Wachses eine chemisch einheitliche Komponente dar, die als Steuerungs-Komponente zur Festlegung der Schalttemperatur dient. Sie wird insbesondere durch Mischen mindestens einer Wachs-Grundmischung mit mindestens einem weiteren Wachs erhalten. Die Schalttemperatur im Sinne der vorliegenden Erfindung ist bevorzugt die Temperatur, bei der sich im Wesentlichen die Wärmeaufnahme bzw. Wärmeabgabe vollzieht.

Bei der Wachs-Grundmischung handelt es sich bevorzugt um ein $C_{17}$-Paraffin. Dem Fachmann ist bekannt, dass derartige kommerzielle Wachse gängigerweise Gemische unterschiedlicher Kohlenwasserstoffe darstellen, die sich sowohl in der Kettenlänge und/oder dem Verzweigungsgrad unterscheiden (siehe oben zur Definition einer Wachs-Grundmischung). Erfindungsgemäß ist die Verwendung einer Wachs-Grundmischung mit einer Hauptkomponente, welche 17 Kohlenstoffatome enthält ($C_{17}$-Paraffin) bevorzugt. Hierbei ist es bevorzugt, dass es sich um ein n-$C_{17}$-Paraffin handelt, d. h. ein geradkettiges $C_{17}$-Parrafin. Jedoch ist es für den Fachmann ersichtlich, dass ein solches Wachs im Sinne einer Kettenlängenverteilung insbesondere auch Verbindungen mit 16 oder 18 Kohlenstoffatomen enthält. Durch diese Auswahl wird der prinzipielle Arbeitstemperaturbereich auf ein Intervall von ca. 18 bis 30°C, bevorzugt 18 bis 28 °C eingestellt.

Wird in einem solchen Wachs-Grundgemisch beispielsweise durch Hinzufügen eines weiteren $C_{16}$-Paraffins (als zusätzliche Steuerungs-Komponente) der $C_{16}$-Anteil erhöht, so kann diese Steuerungs-Komponente bei der Erwärmung den thermischen Energieeintrag verbessern und bei der Abkühlung als Kristallisationskeim fungieren. Dadurch kann die Schalttemperatur des Systems auf ca. 23 °C festgelegt werden, wie es den Anforderungen an Innenräume entspricht. Besonders bevorzugt wird ein geradkettiges n-$C_{16}$-Paraffin verwendet. Besonders bevorzugt werden 5 Massen-% der Steuerungs-Komponente bezogen auf die Wachs-Grundmischung verwendet.

Die Schalttemperaturen sind insbesondere unter Verwendung von Dynamischer Differenzkalorimetrie (Differential Scanning Calorimetry (DSC)) nachweisbar.

Erfindungsgemäß enthält die Zusammensetzung des Weiteren mindestens ein Zeolith der Formel (Na, K, ½ Ca, ½ Mg)$_6$(Al$_6$Si$_{30}$O$_{72}$) x 20 $H_2O$. Damit enthält die erfindungsgemäße Zusammensetzung ein Klinoptilolith.

Ein Klinoptilolith ist ein natürliches Mineral aus der Kristallgruppe der Zeolithe mit sorptiven und ionentauschenden Eigenschaften, wie in "Reviews in Mineralogy & Geochemistry Volume 45, 2001" hinreichend beschrieben ist. Alle Klinoptilolithe kristallisieren im monoklinen Kristallsystem und gehören strukturell zu den Gerüstsilikaten. Die natürliche Form von Klinoptilolith wird erhalten, indem das Mineral in Lagerstätten abgebaut, zerkleinert und gegebenenfalls getrocknet wird. Da Klinoptilolith als natürliches Mineral nie völlig rein gewonnen werden, sondern immer in Vergesellschaftung mit Begleitmineralien wie Feldspaten, Smektit, Montmorillonit oder Christobalit oder anderen Mineralien vorkommt, werden auch Gesteine mit einem Anteil von über 50% natürlichen Zeoliths als natürliches Zeolith bezeichnet. Da Klinoptilolith sehr oft mit dem chemisch ähnlichen Mineral Heulandit vergesellschaftet ist, werden Gesteine mit einem Anteil von über 50% der Summe von Klinoptilolith und Heulandt in der Literatur wie auch hier als Klinoptilolith bezeichnet.

Klinoptilolith weist insbesondere eine massenspezifische äußere Oberfläche von ca. 35 m$^2$/g, eine massenspezifische innere Oberfläche von ca. 350 m$^2$/g und eine gemittelte Gesamtporosität von ca. 35 % auf. Es hat sich überraschenderweise herausgestellt, dass diese Eigenschaften besonders vorteilhaft für die erfindungsgemäße Zusammensetzung sind.

Zeolithe im Allgemeinen und damit auch Klinoptilolith sind eine Unterklasse der Molekularsiebe und weisen eine höhere Selektivität auf als Feststoffe mit großer Oberfläche wie Kieselgel oder Aktivkohle, bei denen Moleküle in unregelmäßigen Lücken zwischen den kleinen Partikeln zurückgehalten werden können. Dies führt dazu, dass durch die Kombination der einzelnen Substanzen in der erfindungsgemäßen Zusammensetzung insgesamt eine Beschichtung erhalten wird, welche sich durch eine sehr hohe Oberflächenporosität, Gesamtporosität und große innere Oberfläche auszeichnet, welche zudem eine hohe Selektivität für Raumluft-Schadstoffe aufweist.

Erfindungsgemäß wird insbesondere die Adsorptions- und Absorptionsfähigkeit der Zeolithe genutzt. Gleichzeitig dient die mindestens eine Zeolithe aber auch als Oxidatorträger. Bevorzugt weist die mindestens eine Zeolithe einen mittleren Porendurchmesser von 0,05 bis 2 nm, besonders bevorzugt von 0,1 bis 1,5 nm und ganz besonders bevorzugt von 0,2 bis 1,2 nm auf. Bevorzugt wird der Porendurchmesser durch ein bildgebendes Verfahren, insbesondere durch Rasterelektronenmikroskopie bestimmt. Die Bestimmung des der Porendurchmesser ist dem Fachmann bekannt. Insbesondere ist ihm bekannt, wie die Porengröße bei ungleichförmigen Poren durch Vermessung der längsten Strecke eines Durchmessers unter Mittelung mindestens 3 Messwerte bestimmt wird.

Die innere Oberfläche, ebenfalls bevorzugt durch das bekannte BET-Verfahren bestimmt, liegt bevorzugt zwischen 100 und 1500 m$^2$/g, besonders bevorzugt zwischen 200 und 1200 m$^2$/g und ganz besonders bevorzugt zwischen 300 bis 1000 m$^2$/g.

Die massenspezifische Wasserspeicherfähigkeit des mindestens einen Zeoliths liegt bevorzugt zwischen 25 und 65 %, besonders bevorzugt zwischen 30 und 50 % und ganz besonders bevorzugt zwischen 35 und 45 %.

Es hat sich überaschenderweise herausgestellt, dass insbesondere ein Zeolith des Klinoptilolith-Typs zur erfindungsgemäßen Wirkung der Zusammensetzung und der resultierenden Beschichtung beiträgt. Ein Klinoptilolith weist ein durchgängiges Kanal-/ Porensystem auf. Dies bedeutet, dass ein Klinoptilolith nicht isolierte Hohlräume, auch als zelluläre Poren bezeichnet, aufweist. Ein Klinoptilolith weist somit keine Schaumstruktur ohne durchgängige Hohlräume auf. Vielmehr weist ein Klinoptilolith ein verzweigtes, tortuoses Netzwerk miteinander verbundener Poren auf. Die Anzahl an Sackporen ist hierbei gering.

Erfindungsgemäß weist die Zusammensetzung des Weiteren mindestens ein Percarbonat auf. Bevorzugt ist dabei, dass mindestens eine Zeolith der erfindungsgemäßen Zusammensetzung mit dem mindestens einen Percarbonat imprägniert wird. Eine solche Imprägnierung kann beispielsweise durch dem Fachmann bekannte Tauch- oder Sprühverfahren erzielt werden. Dabei wird beispielsweise eine wässrige Lösung des Percarbonats vorgelegt und die Zeolithe als Pulver in diese Lösung eingebracht. Nach einer anschließenden Filtration wird der resultierende Feststoff getrocknet, um die imprägnierte Zeolithe zu erhalten. Ebenso ist es möglich, dass die Zeolithe in einer Rotationstrommel mit einer wässrigen Percarbonatlösung besprüht und anschließend getrocknet wird, um die imprägnierte Zeloithe zu ergeben (Sprühverfahren).

Das mindestens eine Percarbonat wirkt als erfindungsgemäßer Oxidator. Dabei ist es insbesondere vorteilhaft, dass der Rest der erfindungsgemäßen Zusammensetzung oxidationsstabil ist. Insbesondere das mindestens eine Zeolith als Träger und auch das Kaliwasserglas als Bindemittel sind oxidationsresistent. Dies führt dazu, dass die Beschichtung, welche aus der erfindungsgemäßen Zusammensetzung erhalten wird, besonders langlebig ist.

Das mindestens eine Percarbonat zersetzt als Oxidator die Raumluft-Schadstoffe bevorzugt in chemische Grundstrukturen wie beispielsweise $H_2O$, $N_2$, $CO_2$ etc. Damit werden die Raumluft-Schadstoffe unschädlich gemacht.

Besonders bevorzugt ist das mindestens eine Percarbonat Natriumpercarbonat. Die Verwendung von Natriumpercarbonat ist besonders vorteilhaft, da es sich um eine Anlagerungsverbindung von Wasserstoffperoxid und Natriumcarbonat handelt. Dies führt dazu, dass sich dieser Oxidator bei Bedarf nachbeladen lässt, d. h. es kann der Beschichtung wieder Wasserstoffperoxid zugeführt werden, um die gegebenenfalls aufgetretene Oxidationswirkung bevorzugt wieder auf die Ausgangsoxidationswirkung zu regenerieren. Dabei können ohne weiteres die Einflüsse des Natriums auf das Kaliwasserglas akzeptiert werden. Sind chemisch stabilere Systeme gefordert, wird jedoch bevorzugt Kaliumperborat verwendet.

Des Weiteren enthält die erfindungsgemäße Zusammensetzung mindestens einen Füllstoff. Der mindestens eine Füllstoff ist Titandioxid und/oder Calciumcarbonat. Besonders bevorzugt umfasst der mindestens eine Füllstoff Titandioxid und Calciumcarbonat. Es hat sich herausgestellt, dass diese Kombination von Füllstoffen insbesondere den Vorteil mit sich bringt, dass die erfindungsgemäße Zusammensetzung einfach, gut und beständig pigmentierbar ist. Ebenso ist die resultierende Beschichtung unter Verwendung dieser Füllstoffkombination und mindestens eines Pigmentes einfach, gut und beständig pigmentiert. Insbesondere sind diese Füllstoffe besonders gut kompatibel mit dem Rest der Zusammensetzung, insbesondere dem Bindemittel. Gleichzeitig spielt auch die Hydratbildungsmöglichkeit der Füllstoffe eine Rolle, so dass durch Kristallwasseranlagerungen des Weiteren das Raumklima beeinflusst und/oder verbessert werden kann.

Die Kombination der erfindungsgemäßen Bestandteile der Zusammensetzung führt dazu, dass die erfindungsgemäße Aufgabe in überraschend guter Weise gelöst wird und die oben geschilderten Effekte erzielt werden.

Die erfindungsgemäße Zusammensetzung wird bevorzugt getrocknet. Damit liegt bevorzugt eine getrocknete Zusammensetzung vor, welche Kaliwasserglas poröses Silikagelpulver, mindestens ein Zeolith der Formel (Na, K, ½ Ca, ½ Mg)$_6$(Al$_6$Si$_{30}$O$_{72}$) x 20 H$_2$O, mindestens ein Percarbonat und mindestens einen Füllstoff enthält. Dies bedeutet, dass die Zusammensetzung in diesem Fall kein zusätzliches Wasser mehr enthält. Damit ist auch Gegenstand der Erfindung eine Beschichtung, welche erhältlich ist durch Trocknung der erfindungsgemäßen Zusammensetzung.

In einer bevorzugten Ausführungsform enthält die erfindungsgemäße Zusammensetzung.

5 bis 15 Massen-% Kaliwasserglas,

2,5 bis 7,5 Massen-% poröses Silikagelpulver,

5 bis 15 Massen-% mindestens eines Zeoliths der Formel

(Na, K, ½ Ca, ½ Mg)$_6$(Al$_6$Si$_{30}$O$_{72}$) x 20 H$_2$O,

0,5 bis 1,5 Massen-% mindestens eines Percarbonats,

sowie mindestens einen Füllstoff und Wasser,

wobei die Massen-% auf die Gesamtmasse der Zusammensetzung bezogen ist und die Massen-% zumindest mit dem mindestens einen Füllstoff und dem Wasser auf 100 Massen-% aufgefüllt werden.

Besonders bevorzugt enthält diese Zusammensetzung des Weiteren

20 bis 30 Massen-% Titandioxid und/oder

20 bis 30 Massen-% Calciumcarbonat,

wobei die Massen-% auf die Gesamtmasse der Zusammensetzung bezogen ist und die Massen-% zumindest mit dem Wasser auf 100 Massen-% aufgefüllt werden.

Ganz besonders bevorzugt enthält diese Zusammensetzung des Weiteren

20 bis 30 Massen-% Titandioxid und

20 bis 30 Massen-% Calciumcarbonat,

wobei die Massen-% auf die Gesamtmasse der Zusammensetzung bezogen ist und die Massen-% zumindest mit dem Wasser auf 100 Massen-% aufgefüllt werden.

Bei den oben genannten Zusammensetzungen ist es insbesondere bevorzugt, dass die Zusammensetzungen zusätzlich 1 bis 10 Massen-% mindestens eines Wachses enthalten, wobei die Massenverhältnisse der anderen Komponenten zueinander beibehalten werden.

In einer weiteren bevorzugten Ausführungsform besteht die erfindungsgemäße Zusammensetzung aus:

10,0 Massen-% Kaliwasserglas,

5,0 Massen-% poröses Silikagelpulver,

10,0 Massen-% mindestens eines Zeoliths der Formel

$$(Na, K, \tfrac{1}{2} Ca, \tfrac{1}{2} Mg)_6(Al_6Si_{30}O_{72}) \; x \; 20 \; H_2O,$$

1,0 Massen-% Natriumpercarbonat,

25,0 Massen-% Titandioxid,

24,0 Massen-% Calciumcarbonat und

25,0 Massen-% Wasser,

wobei die Massen-% auf die Gesamtmasse der Zusammensetzung bezogen ist.

In einer weiteren bevorzugten Ausführungsform besteht die erfindungsgemäße Zusammensetzung aus:

9,1 Massen-% Kaliwasserglas,

4,6 Massen-% poröses Silikagelpulver,

9,1 Massen-% mindestens eines Zeoliths der Formel

$$(Na, K, \tfrac{1}{2} Ca, \tfrac{1}{2} Mg)_6(Al_6Si_{30}O_{72}) \; x \; 20 \; H_2O,$$

0,9 Massen-% Natriumpercarbonat,

22,7 Massen-% Titandioxid,

21,8 Massen-% Calciumcarbonat

9,1 Massen-% Wachs und

22,7 Massen-% Wasser,

wobei die Massen-% auf die Gesamtmasse der Zusammensetzung bezogen ist.

In dieser Ausführungsform ist es des Weiteren bevorzugt, dass die 9,1 Massen-% des Waches 5 Massen % einer $C_{16}$-Paraffin-Komponente enthalten, bezogen auf den Gesamtanteil des Wachses. Besonders bevorzugt handelt es sich bei dem Rest des Wachses im Wesentlichen um ein $C_{17}$-Paraffin (Wachs mit einer Kettenlängenverteilung, welche als Hauptkomponente 17 Kohlenstoffatome enthält).

Die erfindungsgemäße Zusammensetzung in sämtlichen oben beschriebenen Ausführungsformen kann des Weiteren bevorzugt mindestens ein Pigment enthalten. Wie bereits oben ausgeführt, ist es insbesondere vorteilhaft, dass die erfindungsgemäße Zusammensetzung sich durch den Zusatz mindestens eines Pigmentes gut pigmentieren lässt. Dabei erfüllt die resultierende Beschichtung insbesondere auch die ästhetischen Anforderungen, welche an Innenraumwandanstriche gestellt werden. Insbesondere ist die Beschichtung gleichmäßig gefärbt und farbstabil.

Bevorzugt handelt es sich bei dem Pigment um gängige Pigmente, welche für Wandanstriche vom Fachmann verwendet werden. Auf Grund der längeren Farbstabilität sind insbesondere anorganische Pigmente bevorzugt. Dabei sind die meisten Pigmente mit der erfindungsgemäßen Zusammensetzung gut mischbar/kompatibel.

**Verwendung**

In einem weiteren Aspekt betrifft die vorliegende Erfindung auch die Verwendung der erfindungsgemäßen Zusammensetzung, wie sie oben in jeglicher Ausführungsform beschrieben wurde, zur Ab- und/oder Adsorption von organischen und/oder anorganischen Schad- und Geruchsstoffen aus der Luft von Innenräumen und/oder zur Verbesserung des Raumklimas. Insbesondere betrifft die vorliegende Erfindung auch die Verwendung der getrockneten Zusammensetzung zu den genannten Zwecken.

Beim Abbau von organischen Schad- und Geruchsstoffen entsteht erfindungsgemäß Kohlenstoffdioxid. Hierbei werden jedoch human toxische Grenzwerte nicht überschritten, so dass insgesamt das Raumklima dennoch verbessert wird.

Die Wirkungsweise der erfindungsgemäßen Zusammensetzung lässt sich, wie folgt, zusammenfassen. Wird die Zusammensetzung auf eine Oberfläche aufgetragen, so verdunstet das enthaltene Wasser, so dass die Zusammensetzung aushärtet. Dabei bildet sich eine offenporige Struktur, welche insbesondere eine große Oberflächenporosität, Gesamtporosität und innere Oberfläche aufweist. Bedingt durch diese entstehende Struktur, welche durch das Zusammenspiel der Komponenten der Zusammensetzung erhalten wird, können Raumluft-Schadstoffe verringert werden. Solche Raumluft-Schadstoffe (z. B. Formaldehyd, Kohlenstoffdioxid, VOCs, OVOCs) werden zunächst an die Oberfläche der erfindungsgemäßen getrockneten Zusammensetzung antransportiert. Der Stoffübergang aus der fluiden Phase (der Raumluft) an die Oberfläche kann hier durch dem Fachmann bekannte Gleichungen und Modelle beschrieben werden. Als nächstes erfolgt der Stofftransport durch Diffusion in die einzelnen Poren. Hierbei ist es insbesondere zu beachten, dass durch die erfindungsgemäße Zusammensetzung ein im Wesentlichen durchgängiges, turtoses Netzwerk durchgängiger Poren erzielt wird. Dadurch sind insbesondere die Konzentrationsgradienten, welche bei der Diffusion eine dem Fachmann bekannte Rolle spielen, vorteilhaft ausgestaltet. Der innere Transportvorgang innerhalb dieses Porensystems kann ebenso durch dem Fachmann bekannte Modelle und Gleichungen beschrieben werden (siehe insbesondere das 2. Ficksche Gesetz angepasst auf die Porendiffusion). Abschließend erfolgt eine Adsorption und/oder Absorption, welche ebenfalls durch dem Fachmann bekannte Vorgänge beschrieben werden kann. Insbesondere findet erfindungsgemäß eine Oxidation des antransportierten Schadstoffes statt, so dass dieser zersetzt und damit eliminiert wird (Chemisorption). Die gebildeten Oxidationsprodukte können entweder in den Poren verweilen oder durch dem Fachmann bekannte Modelle wieder aus dem Porensystem in die Raumluft freigesetzt werden.

Gleichzeitig führt das System der erfindungsgemäßen Zusammensetzung dazu, dass durch Wasserauf- und -abnahme eine Verbesserung des Raumklimas eintritt.

In einer bevorzugten Verwendung wird die Luft von Wohnräumen oder Maschinenräumen behandelt.

Bevorzugte Schad- und Geruchsstoffe, welche erfindungsgemäß ad- und/oder absorbiert werden, werden ausgewählt aus der Gruppe, bestehend aus Formaldehyd, Kohlenstoffdioxid, VOCs und OVOCs.

Unter einer Absorption wird bevorzugt eine Chemisorption verstanden.

## Beschichtung

In einem weiteren Aspekt der vorliegenden Erfindung wird eine Beschichtung bereitgestellt, welche die erfindungsgemäße Zusammensetzung in sämtlichen oben beschriebenen Ausführungsformen enthält.

Bevorzugt handelt es sich dabei um eine Innenraumbeschichtung. Ganz besonders bevorzugt wird diese Beschichtung erhalten, indem die erfindungsgemäße Zusammensetzung durch Trocknung gehärtet wird.

Die erfindungsgemäße Beschichtung enthält daher die oben beschriebenen Bestandteile der beanspruchten Zusammensetzung, liegt jedoch im Wesentlichen wasserfreien Zustand vor.

Unter einer Beschichtung wird bevorzugt eine durchgehende Schicht verstanden, die durch ein- oder mehrmaliges Auftragen vom Beschichtungsstoff (der erfindungsgemäßen Zusammensetzung) auf ein Substrat entsteht (siehe EN ISO 4618:2006).

Ebenso kann die erfindungsgemäße Beschichtung auch für die erfindungsgemäße Verwendung verwendet werden.

## Verfahren

In einem anderen Aspekt der vorliegenden Erfindung wird ein Verfahren zur Herstellung einer Beschichtung bereitgestellt, welches die folgenden Schritte umfasst:

(a) Auftragen der erfindungsgemäßen Zusammensetzung auf eine Oberfläche und

(b) Aushärtung der Zusammensetzung durch Verdunsten des Wassers.

Bevorzugt wird dadurch die erfindungsgemäße Beschichtung erhalten.

Bei der Oberfläche in Verfahrensschritt (a) kann es sich um jegliches Substrat handeln. Bevorzugt handelt es sich jedoch um eine Wand und/oder Decke. Dabei ist es besonders bevorzugt, dass es sich um einen mineralischen Untergrund handelt, da auf diesem die Haftung der erfindungsgemäßen Zusammensetzung und auch der resultierenden Beschichtung besonders gut ist. Das System diffundiert in einen solchen Untergrund ein und bezieht es in die stattfindenden Kondensationsreaktionen mit ein.

Damit ist die Oberfläche in Verfahrensschritt (a) besonders bevorzugt eine mineralische Wand und/oder Decke eines Innenraumes.

Das Auftragen in Verfahrensschritt (a) kann durch die dem Fachmann bekannten Methoden erfolgen. Besonders bevorzugt wird die erfindungsgemäße Zusammensetzung durch zumindest einmaliges Auftragen mittels Pinsel und/oder Malerrolle aufgetragen.

Im Verfahrensschritt (b) können unterstützend temperaturerhöhende Vorrichtungen, wie beispielsweise Heißluftgeräte eingesetzt werden. Grundsätzlich ist dies jedoch nicht notwendig, da die erfindungsgemäße Zusammensetzung auch bei Umgebungstemperaturen aushärtet.

**Beschreibung der Figur**

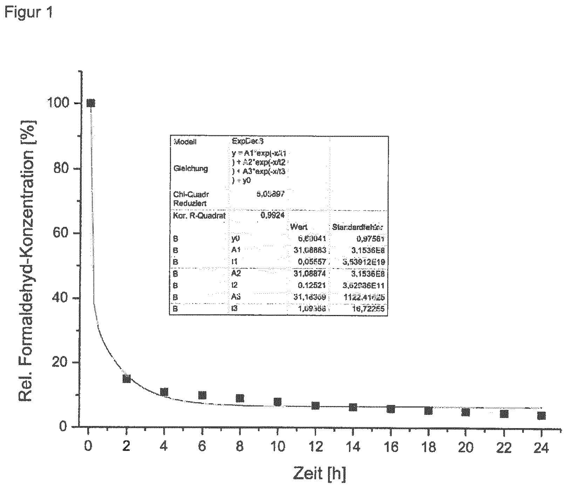

Figur 1:   Die Abbildung zeigt die Abnahme von Formaldehyd (relative Konzentration in %) durch die erfindungsgemäße getrocknete Zusammensetzung in Abhängigkeit von der Zeit gemäß dem Beispiel, wie es durch Gaschromatographie verfolgt wurde. Ebenso ist die entsprechend der Abnahmekurve berechnete mathematische Gleichung dargestellt.

**Beispiele**

Erfindungsgemäß konnte eine Zersetzungsreaktion von Formaldehyd bei einer absoluten Ausgangskonzentration von 300 ppm unter Verwendung einer Reaktionsoberfläche von 1 $m^2$ und einer Auftragsmenge der erfindungsgemäßen Zusammensetzung von 200 g (in getrocknetem Zustand) erhalten werden, welche sich durch die mathematische Formel

$$y = 31{,}08883*(exp(-x/0{,}05557)) + 31{,}08874*(exp(-x/0{,}12521)) + 31{,}18389*(exp(-x/1{,}69358)) + 6{,}60041$$

beschreiben lässt. Die Zersetzung wurde durch Gaschromatographie verfolgt. Ein entsprechendes Diagramm ist in Figur 1 gezeigt.

**Patentansprüche**

1.   Zusammensetzung zur Verwendung als Beschichtung, enthaltend
     ein Kaliwasserglas,
     poröses Silikagelpulver mit einer inneren Oberfläche von 300 bis 1000 $m^2/g$, gemessen durch Gasadsorption (BET-Verfahren) nach ISO 9277:2010,
     mindestens ein Zeolith der Formel

$$(Na, K, ½ Ca, ½ Mg)_6(Al_6Si_{30}O_{72}) \text{ x } 20 \text{ } H_2O,$$

     mindestens ein Percarbonat,
     mindestens einen Füllstoff ausgewählt aus der Gruppe, bestehend aus Titandioxid und Calciumcarbonat und Wasser.

2.   Zusammensetzung nach Anspruch 1, enthaftend
     5 bis 15 Massen-% Kaliwasserglas,
     2,5 bis 7,5 Massen-% poröses Silikagelpulver,
     5 bis 15 Massen-% mindestens eines Zeoliths der Formel

$$(Na, K, ½ Ca, ½ Mg)_6(Al_6Si_{30}O_{72}) \text{ x } 20 \text{ } H_2O,$$

     0,5 bis 1,5 Massen-% mindestens eines Percarbonats,
     sowie mindestens einen Füllstoff und Wasser,
     wobei die Massen-% auf die Gesamtmasse der Zusammensetzung bezogen ist und die Massen-% zumindest mit dem mindestens einen Füllstoff und dem Wasser auf 100 Massen-% aufgefüllt werden.

3. Zusammensetzung nach Anspruch 1, enthaltend
20 bis 30 Massen-% Titandioxid und/oder
20 bis 30 Massen-% Calciumcarbonat,
wobei die Massen-% auf die Gesamtmasse der Zusammensetzung bezogen ist und die Massen-% zumindest mit dem Wasser auf 100 Massen-% aufgefüllt werden.

4. Zusammensetzung nach einem der Ansprüche 1 bis 3, worin das Percarbonat Natriumpercarbonat ist.

5. Zusammensetzung nach einem der Ansprüche 1 bis 4, zusätzlich enthaltend mindestens ein Pigment.

6. Zusammensetzung nach einem der Ansprüche 1 bis 5, zusätzlich enthaltend mindestens ein Wachs.

7. Verwendung der Zusammensetzung nach einem der Ansprüche 1 bis 6 zur Ab- und/oder Adsorption von organischen und/oder anorganischen Schad- und Geruchsstoffen aus der Luft von innenräumen und/oder zur Verbesserung des Raumklimas.

8. Beschichtung, erhalten durch Aushärten der Zusammensetzung nach einem der Ansprüche 1 bis 6.

9. Verfahren zur Herstellung einer Beschichtung, umfassend die Schritte:

(a) Auftragen der Zusammensetzung nach einem der Ansprüche 1 bis 7 auf eine Oberfläche und
(b) Aushärtung der Zusammensetzung durch Verdunsten des Wassers.


**Claims**

1. A composition for the use as coating, containing
a potassium water glass,
porous silica gel powder having an inner surface comprised between 300 and 1000 $m^2/g$, measured by means of gas adsorption (BET method) according to ISO 9277:2010,
at least one zeolite of the formula

$$(Na, K, ½ Ca, ½ Mg)_6(Al_6Si_{30}O_{72}) \text{ x } 20 \text{ } H_2O,$$

at least one percarbonate,
at least one filler material selected from the group consisting of titan dioxide and calcium carbonate and water.

2. A composition according to claim 1, containing
5 to 15 % by mass potassium water glass,
2.5 to 7.5 % by mass porous silica gel powder,
5 to 15 % by mass at least one zeolite of the formula

$$(Na, K, ½ Ca, ½ Mg)_6(Al_6Si_{30}O_{72}) \text{ x } 20 \text{ } H_2O,$$

0.5 to 1.5 % by mass at least one percarbonate,
as well as at least one filler material and water,
wherein the % by mass is based on the total mass of the composition and the % by mass will be made up to 100 % by mass with the at least one filler material and the water.

3. A composition according to claim 1, containing
20 to 30 % by mass titan dioxide and/or
20 to 30 % by mass calcium carbonate,
wherein the % by mass is based on the total mass of the composition and the % by mass will be made up to 100 % by mass at least with the water.

**4.** A composition according to one of the claims 1 through 3, wherein the percarbonate is sodium percarbonate.

**5.** A composition according to one of the claims 1 through 4, additionally containing at least one pigment.

**6.** A composition according to one of the claims 1 through 5, additionally containing at least one wax.

**7.** A use of the composition according to one of the claims 1 through 6 for the absorption and/or adsorption of organic and/or inorganic noxious and odorous substances in the air of indoor spaces and/or for the improvement of the indoor climate.

**8.** A coating obtained by hardening the composition according to one of the claims 1 through 6.

**9.** A method for producing a coating, comprising the steps of:

(a) applying the composition according to one of the claims 1 through 7 onto a surface and
(b) hardening the composition by evaporation of the water.


**Revendications**

**1.** Composition destinée à l'utilisation comme un revêtement, contenant
un silicate de potassium,
de la poudre de gel de silice poreuse ayant une surface intérieure comprise entre 300 et 1000 $m^2$/g mesurée à l'aide de l'adsorption des gaz (procédé BET) selon ISO 9277 :2010,
au moins une zeolithe selon la formule

$$(Na, K, \tfrac{1}{2} Ca, \tfrac{1}{2} Mg)_6(Al_6Si_{30}O_{72}) \times 20\ H_2O,$$

au moins un percarbonate,
au moins une matière de remplissage sélectionnée dans le groupe composé de dioxyde de titane et de carbonate de calcium et
de l'eau.

**2.** Composition selon la revendication 1, contenant
5 à 15 % en masse de silicate de potassium,
2,5 à 7,5 % en masse de poudre de gel de silice poreuse,
5 à 15 % en masse d'au moins une zeolithe selon la formule

$$(Na, K, \tfrac{1}{2} Ca, \tfrac{1}{2} Mg)_6(Al_6Si_{30}O_{72}) \times 20\ H_2O,$$

0,5 à 1,5 % en masse d'au moins un percarbonate,
ainsi qu'au moins une matière de remplissage et de l'eau,
les % en masse étant rapportés à la masse totale de la composition et les % en masse étant remplis à 100 % en masse avec l'au moins une matière de remplissage et l'eau.

**3.** Composition selon la revendication 1, contenant
20 à 30 % en masse de dioxyde de titane et/ou
20 à 30 % en masse de carbonate de calcium,
les % en masse étant rapportés à la masse totale de la composition et les % en masse étant remplis à 100 % en masse avec au moins l'eau.

**4.** Composition selon l'une des revendications 1 à 3, dans lequel le percarbonate est du percarbonate de sodium.

**5.** Composition selon l'une des revendications 1 à 4, comprenant supplémentairement au moins un pigment.

**6.** Composition selon l'une des revendications 1 à 4, comprenant supplémentairement au moins une cire.

**7.** Utilisation de la composition selon l'une des revendications 1 à 6 pour l'absorption et/ou l'adsorption des substances nocives et odorantes dans l'air des espaces intérieurs et/ou l'amélioration du climat intérieur.

**8.** Revêtement obtenu à l'aide du durcissement de la composition selon l'une des revendications 1 à 6.

**9.** Procédé de préparation d'un revêtement, comprenant les étapes de :

(a) appliquer la composition selon l'une des revendications 1 à 7 sur une surface et
(b) faire durcir la composition par moyen d'évaporation de l'eau.

Figur 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10032687 A1
- WO 02060996 A1
- CN 103706244 A

**In der Beschreibung aufgeführte Nicht-Patentliteratur**

- *Reviews in Mineralogy & Geochemistry,* 2001, vol. 45